# EUROPÄISCHE PATENTANMELDUNG

(11) **EP 4 050 314 A1**
(43) Veröffentlichungstag der Anmeldung: **31.08.2022**
(21) Anmeldenummer: 21159591.3
(22) Anmeldetag: 26.02.2021
(51) Int. Cl.: G01M 13/021, F03D 13/30, G01M 13/022, G01M 13/025

(54) **ZENTRALE DREHMOMENTABSTÜTZUNG FÜR PLANETENGETRIEBETESTS MIT DREHMOMENTSTÜTZE**

(71) Anmelder: Flender GmbH, 46395 Bocholt (DE)
(72) Erfinder: Hambrecht, Ralf, 46399 Bocholt (DE)
(74) Vertreter: Michalski Hüttermann & Partner Patentanwälte mbB

(57) **Zusammenfassung**

Die Erfindung betrifft einen Prüfaufbau (1) umfassend eine zentrale Drehmomentkopplungseinrichtung (2) und ein Getriebe (3), wobei die zentrale Drehmomentkopplungseinrichtung (2) ein Wellenteil (21) aufweist, das drehbar gegenüber einem Gehäuseteil (22) der zentralen Drehmomentkopplungseinrichtung (2) angeordnet ist, wobei das Gehäuseteil (22) feststehend gegenüber einem Fundament (5) angeordnet ist, wobei das Wellenteil (21) mit einer Welle (31) des Getriebes (3) kraftschlüssig und/oder formschlüssig verbunden ist, wobei das Getriebe (3) eine Drehmomentstütze (32) aufweist, die an einem Gehäuse (33) oder einem Hohlrad des Getriebes (3) angeordnet ist. Zur Verbesserung des Prüfaufbaus im Hinblick auf das Prüfen einer Komponente oder mehrerer Komponenten eines Antriebsstrangs wird vorgeschlagen, dass die Drehmomentstütze (32) des Getriebes (3) mit dem Gehäuseteil (22) der zentralen Drehmomentkopplungseinrichtung (2) kraftschlüssig und/oder formschlüssig verbunden ist. Ferner betrifft die Erfindung ein Verfahren zur Herstellung eines Prüfaufbaus (1), wobei der Prüfaufbau (1) eine zentrale Drehmomentkopplungseinrichtung (2) aufweist, wobei die Gehäuse (33) und die Statoren (42) der im Prüfaufbau angeordneten Komponenten (3,4) kraftschlüssig und/oder formschlüssig miteinander und mit dem Gehäuseteil (22) der zentralen Drehmomentkopplungseinrichtung (2) verbunden werden.

## Beschreibung

Die Erfindung betrifft einen Prüfaufbau umfassend eine zentrale Drehmomentkopplungseinrichtung und ein Getriebe, wobei die zentrale Drehmomentkopplungseinrichtung ein Wellenteil aufweist, das drehbar gegenüber einem Gehäuseteil der zentralen Drehmomentkopplungseinrichtung angeordnet ist, wobei das Gehäuseteil feststehend gegenüber einem Fundament angeordnet ist, wobei das Wellenteil mit einer Welle des Getriebes kraftschlüssig und/oder formschlüssig verbunden ist, wobei das Getriebe eine Drehmomentstütze aufweist, die an einem Gehäuse oder einem Hohlrad des Getriebes angeordnet ist. Ferner betrifft die Erfindung ein Verfahren zur Herstellung eines Prüfaufbaus.

Windkraftgetriebe werden heutzutage aufgrund der größeren Blattlängen und Leistungen der Windenergieanlagen zunehmend höher belastet und auf ansteigende Drehmomentdichten entwickelt. Mit Windkraftgetriebe werden Getriebe, insbesondere Planetengetriebe, in oder für Windkraftanlagen bezeichnet. Die so entwickelten Getriebe werden in der Serie üblicherweise vor Auslieferung in einem End of line Drehmomenttest mit bis zu 100% des Nennmoments getestet. Für den Test oder die Prüfung wird oftmals auch die elektrische Maschine der Windkraftanlage verwendet, die mit dem Getriebe gekoppelt wird oder auch als Getriebe-Generatorkombination vorgesehen ist. Somit kann ein gesamter Antriebsstrang oder Teile des Antriebsstrangs, insbesondere ein Antriebsstrang oder Teile des Antriebsstrangs einer Windkraftanlage, mit dem Prüfaufbau getestet oder geprüft werden. Aus dieser Tendenz heraus ergeben sich für die Fundamente der Prüfstände ständig steigende Anforderungen hinsichtlich einzuleitender Zugkräfte.

Dazu werden bisher die Zug- und Druckkräfte der Drehmomentstützen direkt oder über Lastverteiler, ggf. über größeren Stützabstand oder größerer Einleitungsfläche, und teilweise auch über Schwingungsentkopplungselemente in das Prüfstandsbett und damit in das Fundament des Prüfstands bzw. des Prüfaufbaus eingeleitet. Mit den Anforderungen an die Tests wachsen somit auch die Anforderungen nicht nur an den Prüfaufbau, sondern auch an die baulichen Gegebenheiten, wie beispielsweise das Fundament des Prüfaufbaus.

Im Folgenden wird nicht genauer zwischen Prüfungen und Tests beim Prüfaufbau unterschieden.

Der Erfindung liegt die Aufgabe zugrunde, einen Prüfaufbau für Prüfungen und/oder Tests einer Komponente oder mehrerer Komponenten eines Antriebsstrangs zu verbessern.

Diese Aufgabe wird durch einen Prüfaufbau umfassend eine zentrale Drehmomentkopplungseinrichtung und ein Getriebe gelöst, wobei die zentrale Drehmomentkopplungseinrichtung ein Wellenteil aufweist, das drehbar gegenüber einem Gehäuseteil der zentralen Drehmomentkopplungseinrichtung angeordnet ist, wobei das Gehäuseteil feststehend gegenüber einem Fundament angeordnet ist, wobei das Wellenteil mit einer Welle des Getriebes kraftschlüssig und/oder formschlüssig verbunden ist, wobei das Getriebe eine Drehmomentstütze aufweist, die an einem Gehäuse oder einem Hohlrad des Getriebes angeordnet ist, wobei die Drehmomentstütze des Getriebes mit dem Gehäuseteil der zentralen Drehmomentkopplungseinrichtung kraftschlüssig und/oder formschlüssig verbunden ist. Ferner wird diese Aufgabe durch ein Verfahren zur Herstellung eines Prüfaufbaus gelöst, wobei der Prüfaufbau eine zentrale Drehmomentkopplungseinrichtung aufweist, wobei die Gehäuse und die Statoren der im Prüfaufbau angeordneten Komponenten kraftschlüssig und/oder formschlüssig miteinander und mit dem Gehäuseteil der zentralen Drehmomentkopplungseinrichtung verbunden werden.

Der Erfindung liegt unter anderem die Erkenntnis zugrunde, dass sich der Prüfaufbau für einen Antriebsstrang dadurch verbessern lässt, dass die Gehäuse der im Prüfaufbau angeordneten Komponenten, d.h. die zu prüfenden Komponenten des Antriebsstrangs, kraftschlüssig und/oder formschlüssig miteinander und mit dem Gehäuseteil der zentralen Drehmomentkopplungseinrichtung verbunden werden. Insbesondere ein zu prüfendes Getriebe weist dabei eine Drehmomentstütze auf, die mit dem Gehäuseteil der zentralen Drehmomentkopplungseinrichtung kraftschlüssig und/oder formschlüssig verbunden ist. Dadurch werden die zur Erzeugung des Drehmoments erforderlichen Kräfte vom Fundament zumindest größtenteils ferngehalten, da das Getriebe über eine Drehmomentkopplungseinrichtung mit dem Fundament verbunden ist. Die entsprechenden Drehmomente werden dann nicht in das Fundament eingebracht, sondern wirken in der Verbindung zwischen den Gehäusen der Komponenten. Damit wird im Wesentlichen nur die Gewichtskraft des gesamten Prüfaufbaus über die zentrale Drehmomentkopplungseinrichtung in das Fundament eingeleitet. Da die Fundamente nur mit sehr hohem Aufwand an die neuen Anforderungen angepasst werden können, wird mit dieser vorgeschlagenen Anordnung eine vom Verspannmoment nahezu unabhängige Zugkrafteinleitung insbesondere auf der langsamen Seite des Getriebes ermöglicht. Die Anbindung des Getriebes an die Drehmomentkopplungseinrichtung an der Seite der langsam drehenden Welle ist vorteilhaft, da die entsprechenden Abstützmomente für die Erzeugung des Drehmoments auf dieser Seite des Getriebes größer sind. Die Abstützkräfte an den Drehmomentstützen werden in dieser vorgeschlagenen Anordnung nicht in das Fundament eingeleitet, sondern in die zentrale Drehmomentkopplungseinrichtung.

Der Wellenteil wird mit der Welle des Getriebes verbunden und kann diese gegebenenfalls lagern. Dabei handelt es sich beispielsweise um die Eingangswelle eines Getriebes, insbesondere eines Planetengetriebes. Bei der Eingangswelle kann es sich beispielsweise um den Planetenträger eines Planetengetriebes handeln. Bei dem Planetengetriebe als Antriebskomponente kann darüber hinaus auch die Zentrierung der Welle durch die Rotorlagereinheit erfolgen. Der Wellenteil ist beispielsweise über Lager drehbar mit dem Gehäuseteil verbunden.

Die Verbindung zwischen der zentralen Drehmomentkopplungseinrichtung und den Getriebedrehmomentstützen erfolgt über jeweils mindestens eine Drehmomentabstützung. Die Ankopplung zwischen Getriebe-Drehmomentstütze und Drehmoment-Abstützung kann durch veränderte Elastizität und oder Dämpfung angepasst werden. Die zentrale Drehmomentkopplungseinrichtung kann direkt mit dem Fundament verbunden werden oder durch einen reib- und formschlüssig angebundenen Führungskasten an das Fundament angebunden werden.

Im Vergleich zu bisherigen Anordnungen von Prüfaufbauten für ein zu prüfendes Getriebe mit einer Drehmomentstütze wird das Verspannmoment in vorteilhafter Weise auf der langsamen Seite über eine zentrale Drehmomentenabstützung mit der zentralen Drehmomentkopplungseinrichtung verbunden und nicht in das Fundament eingeleitet. Damit ergeben sich deutliche Vorteile, bestehende Prüfstandsfundamente weiterzuverwenden, auch wenn steigende Getriebe-Nennmomente gefordert werden. Bestehende Serienprüfstände können im Rahmen der maximalen Leistungsfähigkeit der elektrischen Maschinen verwendet werden, um Getriebe auch mit Überlast zu testen. Die Serienprüfstände könnten mit einer zentralen Drehmomentkopplungseinrichtung ausgestattet werden und damit eine deutliche Performanceerweiterung erfahren.

Durch die vorgeschlagene Anordnung ergeben sich Synergien und die Kosten für den Prüfaufbau können niedrig gehalten werden bei gleichzeitig vergrößertem Leistungsspektrum der bestehenden Prüfstände. Somit können gerade mit dem vorgeschlagenen Aufbau Kosten für das Prüfen der Komponenten wie das Getriebe gespart werden.

Bei einer vorteilhaften Ausgestaltung der Erfindung weist der Prüfaufbau eine elektrische Maschine auf, wobei die Welle des Getriebes mit einem Rotor der elektrischen Maschine kraftschlüssig und/oder formschlüssig verbunden ist. Mit der elektrischen Maschine, beispielsweise dem Generator einer Windkraftanlage, kann der gesamte Antriebsstrang, insbesondere der Antriebsstrang einer Windkraftanlage, geprüft oder getestet werden. Dabei kann das Gehäuse des Getriebes mit dem Stator der elektrischen Maschine kraftschlüssig und/oder formschlüssig verbunden werden, damit von der elektrischen Maschine keine Kräfte oder nur ein geringer Anteil an Kräften über das Fundament an die zentrale Drehmomentkopplungseinrichtung übertragen werden. Dadurch wird das Fundament gar nicht oder nur in geringem Maße belastet. Die Belastung auf das Fundament kann dabei insbesondere so bemessen werden, dass eine zulässige oder vorgebbare Belastung nicht überschritten wird. Daneben ist es auch möglich, die elektrische Maschine auch mit dem Fundament zu verbinden. Dadurch kann beispielsweise die Gewichtskraft der elektrischen Maschine vom Fundament aufgenommen werden und belastet nicht die zentrale Drehmomentkopplungseinrichtung. Die Gewichtskraft kann in aller Regel problemlos auch bei großen Anwendungen vom Fundament aufgenommen werden. Gleichzeitig verringern sich damit die Anforderungen an die Auslegung der zentralen Drehmomentkopplungseinrichtung.

Bei einer weiteren vorteilhaften Ausgestaltung der Erfindung ist der Rotor der elektrischen Maschine drehbar gegenüber einem Stator der elektrischen Maschine angeordnet, wobei der Stator mit dem Gehäuse des Getriebes kraftschlüssig und/oder formschlüssig verbunden ist. Durch die kraftschlüssige und/oder formschlüssige Verbindung zwischen dem Gehäuse der elektrischen Maschine und dem Gehäuse des Getriebes wird das Fundament gar nicht oder nur in geringem Maße belastet. Die Belastung auf das Fundament kann dabei auch in diesem Fall insbesondere so bemessen werden, dass eine zulässige oder vorgebbare Belastung nicht überschritten wird. Darüber hinaus ist es auch in diesem Fall möglich, die elektrische Maschine auch mit dem Fundament zu verbinden. Dadurch kann dann beispielsweise die Gewichtskraft der elektrischen Maschine vom Fundament aufgenommen werden und belastet nicht die zentrale Drehmomentkopplungseinrichtung. Die Gewichtskraft kann in aller Regel problemlos auch bei großen Anwendungen vom Fundament aufgenommen werden. Gleichzeitig verringern sich damit die Anforderungen an die Auslegung der zentralen Drehmomentkopplungseinrichtung.

Bei einer weiteren vorteilhaften Ausgestaltung der Erfindung ist der Stator der elektrischen Maschine direkt mit dem Fundament verbunden. Die direkte Verbindung kann dabei einen Aufbau wie beispielsweise einen Sockel umfassen, mit dem die elektrische Maschine auf dem Fundament steht. Unter direkt ist zu verstehen, dass die elektrische Maschine nicht oder nicht nur über die zentrale Drehmomentkopplungseinrichtung mit dem Fundament verbunden ist. Durch diese Anwendung ist es möglich, die Belastung durch die Gewichtskraft von der zentralen Drehmomentkopplungseinrichtung fernzuhalten. Je größer die Ausdehnung des Prüfaufbaus, desto größer ist die Belastung der zentralen Drehmomentkopplung durch das auftretende Moment, das sich aus der Gewichtskraft der elektrischen Maschine ergibt. Besonders vorteilhaft ist dieser Aufbau, wenn der Stator mit dem Gehäuse des Getriebes kraftschlüssig und/oder formschlüssig verbunden ist. Dann kann zum einen die Gewichtskraft besonders einfach vom Fundament aufgenommen werden. Dies ist in aller Regel durch das bestehende Fundament möglich. Darüber hinaus entfällt die Belastung der zentralen Drehmomentkopplungseinrichtung mit der Gewichtskraft und dem dazugehörigen Moment auf die zentrale Drehmomentkopplungseinrichtung. Somit kann durch diese Anordnung ein besonders kostengünstiger Aufbau im Hinblick auf die Belastung des Fundaments und der zentralen Drehmomentkopplungseinrichtung erzielt werden. Dies macht auch den Prüfaufbau besonders kostengünstig und einfach realisierbar.

Bei einer weiteren vorteilhaften Ausgestaltung der Erfindung weist das Getriebe ein Übersetzungsverhältnis von mindestens 40, insbesondere mindestens 200, auf, wobei die elektrische Maschine auf der Seite des schnell drehenden Wellenteils des Getriebes angeordnet ist. Je größer das Übersetzungsverhältnis des Getriebes ist, desto geringer sind die Auswirkungen der Drehmomenterzeugung auf das Fundament. Bei einer Konstellation, bei der die elektrische Maschine mit dem Fundament verbunden ist, wird folglich lediglich eine sehr stark reduzierte Verspannmomentabstützung auf der schnellen Drehzahl Seite eingeleitet. Dies ermöglicht, auf eine Verbindung des Stators der elektrischen Maschine mit dem Gehäuse des Getriebes zu verzichten, wenn die elektrische Maschine mit der schnell drehenden Seite des Getriebes verbunden ist. Dieses eingeleitete Moment ist um den Faktor der Übersetzung, typischerweise bei i = 40 bis i=200 reduziert und damit sehr weit von den bisherigen Fundamentbegrenzungen entfernt. Es hat sich gezeigt, dass bereits ab einem Getriebeübersetzung von i = 40 die Belastung über das Fundament bereits so gering ist, dass in den meisten Fällen dann bereits keine Verbindung zwischen dem Gehäuse des Getriebes und dem Stator erforderlich ist, um die Belastungsgrenzen des Fundaments einzuhalten. Insbesondere ab einem Getriebeübersetzungsverhältnis von i = 200 ist die Belastung über das Fundament durch die elektrische Maschine bereits vernachlässigbar. Für diese Übersetzungsverhältnisse kann allein durch die Anbindung des Gehäuses des Getriebes an das Gehäuseteil der zentralen Drehmomentkopplungseinrichtung über die Drehmomentstütze die Belastung des Fundaments hinreichend reduziert werden. Dies ermöglicht einen einfachen und kostengünstigen Aufbau, da keine Vorkehrungen zum Abfangen des Motormoments in dem Verspannkreis erforderlich sind, um die Belastung des Fundaments unter einer zulässigen oder vorgegebenen Belastung zu reduzieren.

Bei einer weiteren vorteilhaften Ausgestaltung der Erfindung weist der Prüfaufbau zwei Getriebe und zwei elektrische Maschinen auf, wobei der Prüfaufbau in einer back-to-back Anordnung angeordnet ist. Die Abstützkräfte an den Drehmomentstützen werden nicht in das Fundament eingeleitet, sondern in die zentrale Drehmomentkopplungseinrichtung, welche mit beiden Testeinheiten der "back to back" Anordnung verbunden ist. Durch diese Art der Anbindung wird das Verspannmoment zwischen der Motor-Seite und der gegenüberliegenden Generator-Seite aufgebracht ohne den Umweg über das Fundament. Da durch die back-to-back Anordnung Gewichtskräfte auf beiden Seiten der zentralen Drehmomentkopplung wirken, ist die Belastung durch ein Drehmoment besonders gering. Ein Abfangen der Gewichtskraft von den elektrischen Maschinen über eine direkte Verbindung zum Fundament erübrigt sich damit in vielen Fällen.

Mit dieser Anordnung ist es möglich, gleichzeitig mindestens zwei Antriebskomponenten wie beispielsweise Getriebe, insbesondere zwei Planetengetriebe, zu prüfen. An beiden Seiten der zentralen Drehmomentkopplungseinrichtung wird jeweils das Getriebe und gegebenenfalls jeweils die elektrische Maschine angeordnet. Ein derartiger Aufbau eignet sich aufgrund seiner Leistungsfähigkeit insbesondere für das Testen und Prüfen eines Windgetriebes, also eines Getriebes für die Anwendung in einer Windkraftanlage, sowie auch für Generatoren von Windkraftanlagen und entsprechenden Getriebe-Generator Kombinationen, da diese oftmals eine Nennleistung von mehr als 3 MW aufweisen und damit das Fundament hinreichend entlasten. Ein Antriebsstrang in derartiger Leistungsfähigkeit würde vielfach ohne den vorgeschlagenen Aufbau die Belastbarkeit des Fundaments, teilweise sogar deutlich, übersteigen.

Durch die zwei elektrischen Maschinen ist es darüber hinaus möglich, Drehmoment und Drehzahl unabhängig voneinander vorzugeben, mit denen das Getriebe und die elektrische Maschine belastet oder getestet werden.

Bei einer weiteren vorteilhaften Ausgestaltung der Erfindung sind die Getriebe und die elektrischen Maschinen bezüglich der zentralen Drehmomentstütze symmetrisch angeordnet. Mit der symmetrischen Anordnung ist gemeint, dass die zentrale Drehmomentkopplungseinrichtung zentral angeordnet ist und sich von beiden Seiten zunächst das Getriebe und daran die elektrische Maschine anschließt. Eine baugleiche Ausführung von Getriebe und elektrischer Maschine ist zwar vorteilhaft, umfasst aber nicht notwendigerweise den hier beanspruchten symmetrischen Aufbau.

Der Prüfaufbau ist bei dem back-to-back Aufbau symmetrisch bezüglich der zentralen Drehmomentkopplungseinrichtung ausgeführt. Auch die Rotorlagereinheit kann in diesem Fall symmetrisch ausgeführt sein. Bei dieser Art der back-to-back Verspannprüfung ist der rotierende Teil auf der langsamen Drehzahlseite des Getriebes mit einer zentralen Welle verbunden, die durch eine Mittellagerung gegenüber dem zentralen Drehmomentkopplungselement in axialer wie radialer Richtung gelagert ist. Das Getriebegehäuse dagegen ist über die jeweilige Drehmomentstütze mit der zentralen Drehmomentkopplungseinrichtung fest verbunden, so dass es nur eine eingeschränkte Beweglichkeit besitzt. Der symmetrische Aufbau wirkt sich besonders vorteilhaft auf die Gewichtsverteilung auf das Fundament aus. Darüber hinaus können damit eine Vielzahl von Prüfungen unter verschiedenen Drehmoment-/Drehzahlbelastungen durchgeführt werden.

Im Folgenden wird die Erfindung anhand der in den Figuren dargestellten Ausführungsbeispiele näher beschrieben und erläutert. Es zeigen:

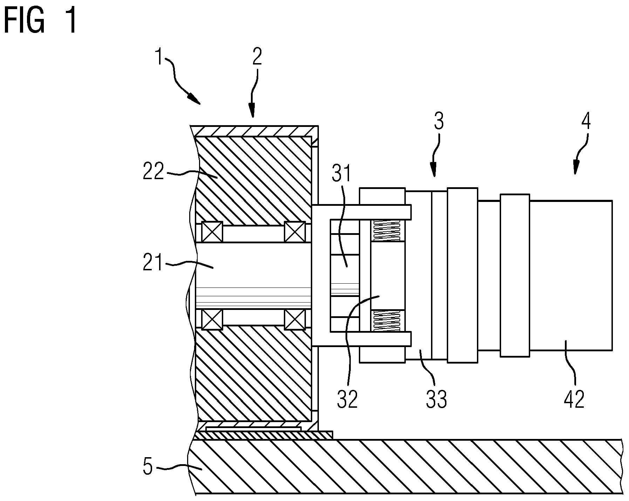

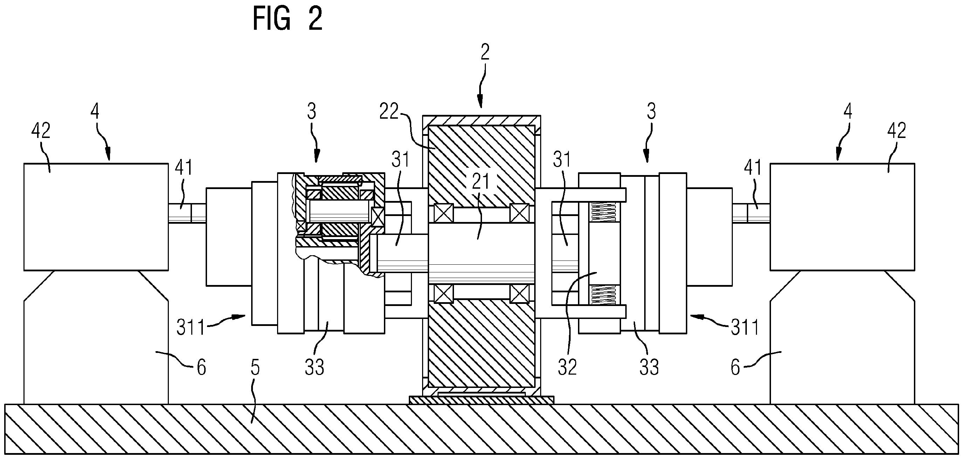

- FIG 1 und FIG 2: Ausführungsbeispiele von Prüfaufbauten.

Die FIG 1 zeigt ein erstes Ausführungsbeispiel eines Prüfaufbaus 1. Dieser weist eine zentrale Drehmomentkopplungseinrichtung 2 auf. Diese Drehmomentkopplungseinrichtung 2 weist wiederum einen Wellenteil 21 und einen Gehäuseteil 22 auf. Der Gehäuseteil 22 ist ortsfest und mit dem Fundament 5 verbunden. Der Wellenteil 21 ist drehbar gegenüber dem Gehäuseteil 22 angeordnet. Dies kann beispielsweise mittels Lager geschehen. Der Wellenteil 21 rotiert im Betrieb. Dazu ist er mit einer Welle 31 eines Getriebes 3 verbunden. Bei der Welle 31 kann es sich beispielsweise um die Eingangswelle des Getriebes 3 handeln. Im Falle der Ausgestaltung des Getriebes 3 als Planetengetriebe kann es sich bei der Welle 31 beispielsweise um den Planetenträger des Planetengetriebes handeln. Darüber hinaus weist das Getriebe 3 auch ein Gehäuse 33 auf. An diesem Gehäuse 33 ist eine Drehmomentstütze 32 angeordnet. Mittels der Drehmomentstütze 32 ist das Gehäuse 33 des Getriebes 3 mit dem Gehäuseteil 22 der Drehmomentkopplungseinrichtung 2 kraftschlüssig und/oder formschlüssig verbunden. Auf der der Drehmomentkopplungseinrichtung 2 abgewandten Seite des Getriebes 3 kann das Getriebe 3 mit einer elektrischen Maschinen 4, beispielsweise einem Windkraftgenerator, verbunden sein. Diese elektrische Maschine 4 weist einen Rotor 41 auf, der jedoch in dieser FIG 1 von dem Stator 42 verdeckt wird. Der Rotor 41 ist mit der Welle der elektrischen Maschine 4 verbunden, während der Stator 42 das feststehende Element der elektrischen Maschine 4 bildet. Der Rotor 41 ist über die Welle der elektrischen Maschine 4 mit der Welle 31 des Getriebes 3 kraftschlüssig und/oder formschlüssig verbunden. In diesem Ausführungsbeispiel ist der Stator 42 mit dem Gehäuse 33 des Getriebes 3 verbunden. Dadurch wird eine Übertragung von Kräften zwischen der zentralen Drehmomentkopplungseinrichtung 2 und der elektrischen Maschine 4 über das Fundament 5 zuverlässig verhindert. Der Stator 42 der elektrischen Maschine 4 kann beispielsweise mittels eines Flansches mit dem Gehäuse 33 des Getriebes 3 verbunden sein. Bei dieser hier gezeigten Anordnung gibt es keine direkte Verbindung der elektrischen Maschine 4 beispielsweise über einen Sockel mit dem Fundament 5.

Die FIG 2 zeigt ein weiteres Ausführungsbeispiel eines Prüfaufbaus 1. Bei diesem Ausführungsbeispiel ist der Prüfaufbau 1 in einer back-to-back Anordnung angeordnet. Zur Vermeidung von Wiederholungen wird auf die Beschreibung zur FIG 1 sowie auf die dort eingeführten Bezugszeichen verwiesen. Die Komponenten des Antriebsstranges, also das Getriebe 3 und die elektrische Maschine 4, sind dabei symmetrisch zur zentralen Drehmomentkopplungseinrichtung 2 angeordnet. Das heißt, dass sich an die Drehmomentkopplungseinrichtung 2 zunächst an beiden Seiten das Getriebe 3 anschließt und dahinter, von der zentralen Drehmomentkopplungseinrichtung 2 aus gesehen, jeweils die elektrische Maschine 4 angeordnet ist. Die Symmetrie bezieht sich ausdrücklich nicht auf die Ausgestaltung der einzelnen Komponenten, insbesondere von Getriebe 3 und elektrischer Maschine 4, sondern ausschließlich auf deren Anordnung.

In diesem Ausführungsbeispiel ist der Stator 42 der elektrischen Maschinen 4 nicht mit dem Gehäuse 33 des Getriebes 3 verbunden. Die Verbindung des Stators 42 zum Fundament 5 erfolgt ausschließlich direkt über einen Aufbau 6, der auch als Sockel bezeichnet wird. Eine weitere Verbindung zum Fundament 5 über die zentrale Drehmomentkopplungseinrichtung 2 zum Fundament 5, die über die direkte Verbindung hinausgeht, ist optional möglich, in diesem Ausführungsbeispiel jedoch nicht vorgesehen. Diese Verbindung zum Fundament 5 oder Anbindung an das Fundament 5 kann jedoch ohne weitere Änderungen im Prüfaufbau ergänzt werden. Durch die Verbindung des Gehäuses 33 des Getriebes 3 mit dem Gehäuseteil 22 der zentralen Drehmomentkopplungseinrichtung 2 wird ein Großteil der Belastungen, die über das Fundament 5 geführt werden würden, wenn die Drehmomentstützen 32 direkt mit dem Fundament 5 verbunden wären, bereits vermieden. Je größer das Übersetzungsverhältnis des Getriebes 3 ist, desto geringer sind die Kräfte, die in dieser Anordnung zwischen der elektrischen Maschine 4 und der Drehmomentkopplungseinrichtung 2 über das Fundament 5 wirken. Voraussetzung dazu ist jedoch, dass die elektrische Maschine 4 an der Seite des schnell drehenden Wellenteils 311 des Getriebes 3 angeordnet ist. Damit sind die Kräfte auf dieser Seite entsprechend geringer. Ab einem Übersetzungsverhältnis von 40 nehmen die Kräfte über das Fundament 5 und damit die Belastung des Fundaments 5 spürbar ab. Ab einem Übersetzungsverhältnis von 200 sind diese Kräfte über das Fundament 5 vernachlässigbar.

Ein weiterer Vorteil dieses Ausführungsbeispiels liegt darin, dass die Gewichtskraft der elektrischen Maschine 4 direkt über den Aufbau 6 in das Fundament 5 eingeleitet werden kann und die zentrale Drehmomentkopplungseinrichtung 2 damit nicht unnötig belastet.

Um die Kräfte im Fundament 5 wirkungsvoll zu begrenzen, kann auch neben der direkten Anbindung der elektrischen Maschine 4 an das Fundament 5, beispielsweise über einen Aufbau 6, auch indirekt über eine kraftschlüssige und/oder formschlüssige Verbindung zwischen dem Stator 42 und dem Gehäuse 33 des Getriebes 3 geschehen, bei der die Drehmomente bzw. Kräfte zumindest zum Teil über die Drehmomentkopplungseinrichtung 2 in das Fundament 5 eingeleitet werden.

Bei dem back-to-back Aufbau können gleichzeitig zwei Getriebe 3 und zwei elektrische Maschinen 4 getestet werden. Dies entspricht den Komponenten zweier Antriebsstränge, die gleichzeitig geprüft bzw. getestet werden können. Ein derartiger Aufbau eignet sich aufgrund seiner Leistungsfähigkeit insbesondere für das Testen und Prüfen eines Windgetriebes, also eines Getriebes für die Anwendung in einer Windkraftanlage, sowie auch für Generatoren 3 von Windkraftanlagen und entsprechenden Getriebe-Generator Kombinationen, da diese oftmals eine Nennleistung von mehr als 3 MW aufweisen und entsprechende Belastungen im Fundament 5 hervorrufen, die ohne den vorgeschlagenen Aufbau oftmals zulässige Grenzwerte überschreiten. Durch die zwei elektrischen Maschinen 4 ist es möglich, Drehmoment und Drehzahl unabhängig vorzugeben, mit denen die zu prüfenden Komponenten 3,4 der Antriebsstränge belastet oder getestet werden.

Zusammenfassend betrifft die Erfindung einen Prüfaufbau umfassend eine zentrale Drehmomentkopplungseinrichtung und ein Getriebe, wobei die zentrale Drehmomentkopplungseinrichtung ein Wellenteil aufweist, das drehbar gegenüber einem Gehäuseteil der zentralen Drehmomentkopplungseinrichtung angeordnet ist, wobei das Gehäuseteil feststehend gegenüber einem Fundament angeordnet ist, wobei das Wellenteil mit einer Welle des Getriebes kraftschlüssig und/oder formschlüssig verbunden ist, wobei das Getriebe eine Drehmomentstütze aufweist, die an einem Gehäuse oder einem Hohlrad des Getriebes angeordnet ist. Zur Verbesserung des Prüfaufbaus im Hinblick auf das Prüfen einer Komponente oder mehrerer Komponenten eines Antriebsstrangs wird vorgeschlagen, dass die Drehmomentstütze des Getriebes mit dem Gehäuseteil der zentralen Drehmomentkopplungseinrichtung kraftschlüssig und/oder formschlüssig verbunden ist. Ferner betrifft die Erfindung ein Verfahren zur Herstellung eines Prüfaufbaus, wobei der Prüfaufbau eine zentrale Drehmomentkopplungseinrichtung aufweist, wobei die Gehäuse und die Statoren der im Prüfaufbau angeordneten Komponenten kraftschlüssig und/oder formschlüssig miteinander und mit dem Gehäuseteil der zentralen Drehmomentkopplungseinrichtung verbunden werden.

## Patentansprüche

1. Prüfaufbau (1) umfassend eine zentrale Drehmomentkopplungseinrichtung (2) und ein Getriebe (3), wobei die zentrale Drehmomentkopplungseinrichtung (2) ein Wellenteil (21) aufweist, das drehbar gegenüber einem Gehäuseteil (22) der zentralen Drehmomentkopplungseinrichtung (2) angeordnet ist, wobei das Gehäuseteil (22) feststehend gegenüber einem Fundament (5) angeordnet ist, wobei das Wellenteil (21) mit einer Welle (31) des Getriebes (3) kraftschlüssig und/oder formschlüssig verbunden ist, wobei das Getriebe (3) eine Drehmomentstütze (32) aufweist, die an einem Gehäuse (33) oder einem Hohlrad des Getriebes (3) angeordnet ist, **dadurch gekennzeichnet, dass** die Drehmomentstütze (32) des Getriebes (3) mit dem Gehäuseteil (22) der zentralen Drehmomentkopplungseinrichtung (2) kraftschlüssig und/oder formschlüssig verbunden ist.

2. Prüfaufbau (1) nach Anspruch 1, wobei der Prüfaufbau (1) eine elektrische Maschine (4) aufweist, wobei die Welle (31) des Getriebes (3) mit einem Rotor (41) der elektrischen Maschine (4) kraftschlüssig und/oder formschlüssig verbunden ist.

3. Prüfaufbau (1) nach Anspruch 2, wobei der Rotor (41) der elektrischen Maschine (4) drehbar gegenüber einem Stator (42) der elektrischen Maschine (4) angeordnet ist, wobei der Stator (42) mit dem Gehäuse (33) des Getriebes (3) kraftschlüssig und/oder formschlüssig verbunden ist.

4. Prüfaufbau (1) nach einem der Ansprüche 2 oder 3, wobei der Stator (42) der elektrischen Maschine (4) direkt mit dem Fundament (5) verbunden ist.

5. Prüfaufbau (1) nach Anspruch 4, wobei das Getriebe (3) ein Übersetzungsverhältnis von mindestens 40, insbesondere mindestens 200, aufweist, wobei die elektrische Maschine (4) auf der Seite des schnell drehenden Wellenteils des Getriebes (3) angeordnet ist.

6. Prüfaufbau (1) nach einem der Ansprüche 1 bis 5, wobei der Prüfaufbau (1) zwei Getriebe (3) und zwei elektrische Maschinen (4) aufweist, wobei der Prüfaufbau (1) in einer back-to-back Anordnung angeordnet ist.

7. Prüfaufbau (1) nach Anspruch 6, wobei die Getriebe (3) und die elektrischen Maschinen (4) bezüglich der zentralen Drehmomentkopplungseinrichtung (2) symmetrisch angeordnet sind.

8. Verfahren zur Herstellung eines Prüfaufbaus (1), wobei der Prüfaufbau (1) eine zentrale Drehmomentkopplungseinrichtung (2) aufweist, wobei die Gehäuse (33) und die Statoren (42) der im Prüfaufbau angeordneten Komponenten (3,4) kraftschlüssig und/oder formschlüssig miteinander und mit dem Gehäuseteil (22) der zentralen Drehmomentkopplungseinrichtung (2) verbunden werden.
